# EUROPEAN PATENT SPECIFICATION

(11) **EP 3 352 371 B1**
(45) Date of publication and mention of the grant of the patent: **30.09.2020**
(21) Application number: 17152177.6
(22) Date of filing: 19.01.2017
(51) Int. Cl.: H02S 10/00, C25B 3/04, C25B 9/00

(54) **POWER SUPPLY SYSTEM FOR A SELF-SUFFICIENT BUILDING**
ENERGIEVERSORGUNGSSYSTEM FÜR EIN AUTARKES GEBÄUDE
SYSTÈME D'ALIMENTATION ÉLECTRIQUE POUR UN BÂTIMENT AUTONOME

(43) Date of publication of application: 25.07.2018
(73) Proprietor: Methanology AG, 8212 Neuhausen am Rheinfall (CH)
(72) Inventor: Krüger, Lars, 18055 Rostock (DE); Herz, Christoph, 18055 Rostock (DE); Schönhoff, Martin, 18055 Rostock (DE)
(74) Representative: Moré, Solveig Helga

(56) References cited:
- WO-A1-2013/006317
- WO-A2-2016/078649
- US-A1- 2011 237 839
- US-B1- 7 444 189

## Description

The present invention relates to a power supply system for a self-sufficient, i.e., autarkic, building, wherein the system is capable of covering both electrical and thermal energy needs of the building throughout the year, independent of additional energy sources, a self-sufficient building comprising said system and a process for operating said system. The power supply system comprises a renewable energy plant, e.g. a photovoltaic system, an apparatus for the production of methanol by reduction of CO₂ by means of electro-biocatalysis comprising directly heated electrodes, a methanol tank, a thermal energy storage, a combined heat and power plant, a rechargeable battery, and, optionally, a furnace for burning methanol and generating heat and/or a thermal heat pump. The system advantageously is CO₂-neutral when in use.

Because of increasing energy prices, decreasing energy sources and the progression of global warming, intelligent power systems for the energy supply of buildings based on renewable energy sources become more and more important. Despite numerous projects to implement economical zero-energy or plus-energy buildings, development of a power system for a self-sufficient building which is capable of covering both electrical and thermal energy needs of the building independent of additional energy sources has not yet been achieved.

EP 2 157 254 A1 shows a power system wherein the photovoltaic rooftop solar installation of low-energy houses is dimensioned large enough to produce the amount of electricity for the entire heating demand in the sunny summer season, wherein the electricity is supplied to the grid. The electricity is returned in winter to operate the heating. Any heating support, in particular through ovens, is omitted. However, this system does not show a possibility to store power and is not self-sufficient, in particular, it is not independent of mains supply.

DE 10 2012 023 933 A1 shows a novel process for operating mini or micro combined heat and power plants (CHPP) focused on the generation of power for electric energy supply of buildings and mobile equipment (in particular, electric vehicles) in different sizes which is, to a large extent, self-sufficient, as well as technical processes regarding electric energy demand. This process merely optimizes the use of electric energy, but does not serve as a power supply system for electric and thermal energy.

US 2012/0261091 A1 shows a system which can be used as an air condition for buildings and other useable areas used by humans in a completely self-sufficient manner. This system only serves as an optimized power supply system for thermal energy but not for electric energy.

The prior art power systems show either systems which are merely capable of covering the thermal energy needs of a building or capable of covering the electrical energy needs. Some systems are capable of covering both, but these systems are not completely independent and rely on the support of mains power or additional energy sources such as firewood.

The biggest problem of renewable energy sources is the seasonal availability. Solar power, for example, is mostly available in summer, whereas the highest energy requirements arise in winter. Hence, there is a necessity of accumulating energy for a longer period. Because of the required size, it is not economical to accumulate the energy in batteries. Chemical energy carriers, the most widely used so far hydrogen, are another possibility of accumulating energy. Hydrogen however has several disadvantages, such as the needed high pressure and/or cryogenic equipment.

In light of the approaches described above, the inventors solved the problem of providing a system for a self-sufficient building which is capable of covering both electrical and thermal energy needs of the building throughout the year independent of additional energy sources.

The invention relates to a power system for a self-sufficient building, comprising
(a) a renewable energy plant for providing electric energy,
(b) an apparatus for the production of methanol by the reduction of CO₂ by means of electro-biocatalysis, preferably, comprising directly heated electrodes for producing methanol using electric energy,
(c) a methanol tank for storing methanol,
(d) a thermal energy storage for storing and withdrawing thermal energy,
(e) a combined heat and power plant optimized to generate heat, delivering electricity as the by-product, for generating thermal and electric energy from methanol and
(f) a rechargeable battery for storing and withdrawing electric energy, and,
(g) a thermal heat pump for using waste heat created by the apparatus for the production of methanol for generation of thermal energy,
wherein the system is capable of covering both electrical energy and thermal energy needs of the building throughout the year, independent of additional energy sources. Additional energy sources are energy sources other than those mentioned in (a)-(g).

This preferably includes independence from mains supply. Optionally, the building is off-grid, i.e., it does not have an electrical linkage to the grid. Of course, it is not required that the building is off-grid. For example, in Germany, linkage to the grid is obligatory under most circumstances.

Advantageously, the system is also CO₂-neutral when in use.

In one embodiment, the power-system does not comprise a furnace for burning methanol and generating heat. In one embodiment, the power-system comprises a thermal heat pump and a furnace for burning methanol and generating heat, which is useful when the heat requirements are expected to be high in comparison to electricity requirements. Preferably, in particular for typical heat and electricity requirements, e.g., for a single-family house complying with the passive-house-standard, the system comprises either a thermal heat pump or a furnace for burning methanol and generating heat. In one embodiment, the power-system comprises a thermal heat pump and no furnace for burning methanol and generating heat. In one embodiment, the power-system comprises no thermal heat pump, but a furnace for burning methanol and generating heat.

The building may be a house, i.e. a residential house, e.g., a single-family house, such as a detached, semi-detached or terraced house or a multi-family house such as an apartment building, e.g., for two, three, four, five, six, seven, eight, nine, ten or more, 20 or more or 50 or more families. In the context, "family" is not limited to a typical family of 2 adults and children, but also encompasses individuals or other groups of people living in one apartment or house. The house may also be a complex of semi-detached or terraced houses, e.g., a row of terraced houses. The house may also be a residential establishment, e.g., a hall of residence for students or a nursing home. It may also be a non-residential building, e.g., an office building, a functional building such as a school, a university building, a hospital, a shopping center, an airport etc., or a combination thereof.

The needs of the building depend on the properties of the building itself, such as size, thermal insulation, purpose of the building, and on the location of the building. The needs include the total amount of energy which is spent over one year for heating, hot water production and electricity.

Preferably, the self-sufficient building meets the requirements of the passive-house standard and has an average energy need of at most 15 kWh/m²a for heating. Energy needs for warm water are preferably at most 20 kWh/m²a and energy needs for electricity are preferably at most 23 kWh/m²a. For example, typicl energy needs for a single-family house complying with the passive-house-standard may be 10-15 kWh/m²a for heating, 2000-3000 kWh/a for warm water and 2300-3500 kWh/a for electricity. Passive-house standard is defined by Passive House Institute Darmstadt (Kriterien für den Passivhaus-, EnerPHit- und PHI-Energiesparhaus-Standard, Version 9f, Stand 26.08.2016, Passivhaus Institut Darmstadt, in particular as laid out in Table 1. A passive-house may be a passive-house classic, plus or premium. It may be a residential passive-house.

A passive-house preferably is a building that will largely heat and cool itself passively, because the heat loss of the building is minimized up to 80-90 % by an optimized building envelope. Preferably, the building envelope of a passive-house is draft proof, almost free of thermal bridges and highly insulated.

A passive-house to be built, e.g., in Germany or in a comparable temperature zone, can be designed, e.g., as follows:
(a) Thermal insulation
   All opaque building components of the exterior envelope of the house should be very well-insulated. For most cool-temperate climates, this means a heat transfer coefficient (U-value) of 0.15 W/(m²K) at the most, i.e. a maximum of 0.15 watts per degree of temperature difference and per square meter of exterior surface are lost.
(b) Passive house windows
   The window frames should be well insulated and fitted with low-e glazings filled with argon or krypton to prevent heat transfer. For most cool-temperate climates, this means a U-value of 0.80 W/(m²K) or less, with g-values around 50% (g-value= total solar transmittance, proportion of the solar energy available for the room).
(c) Ventilation heat recovery
   Efficient heat recovery ventilation may save energy, e.g., at least 75% of the heat from the exhaust air may optionally be transferred to the fresh air by means of a heat exchanger.
(d) Airtightness of the building
   Uncontrolled leakage through gaps should be smaller than 0.6 of the total house volume per hour during a pressure test at 50 Pascal (both pressurised and depressurised).
(e) Absence of thermal bridges
   All edges, corners, connections and penetrations should be planned and executed with great care, so that thermal bridges can be avoided. Thermal bridges which cannot be avoided should be minimized as far as possible.

The building may also be a building according to EnerPHit standard or PHI energy savings house standard (Kriterien für den Passivhaus-, EnerPHit- und PHI-Energiesparhaus-Standard, Version 9f, Stand 26.08.2016, Passivhaus Institut Darmstadt). Preferably, it complies at least with the passive-house standard.

The renewable energy plant can be, e.g., a solar-based system such as a photovoltaic system, a wind-based plant, a hydroelectric power plant, a geothermal plant, or a combination of such plants, e.g., a combination of a photovoltaic system and a wind-based plant. It depends on the availability of renewable energy sources, such as solar power, wind or hydropower which plant or which combination of plants is optimal. The renewable energy plant at least generates electricity, but it may additionally further generate thermal energy, e.g., in the form of a combined photovoltaic and solar thermal energy plant. A biomass-based plant is not considered a renewable energy plant in the context of the invention.

It is one of the advantages of the present invention that, preferably, a renewable energy plant, in particular, a solar-based system, which is localized in the immediate vicinity of the building, e.g., on the outside (roof and/or walls, preferably, at least the roof) thereof, integrated in the outside or directly linked thereto, may be used. Preferably, said system does not take up significant additional ground area or leads to a significantly higher required ground area of the building. An increase in more than 5%, or preferably, more than 1% or required ground area may be considered significant. For example, a photovoltaic system may be located on or integrated into the roof (and, optionally, also walls and/or balcony fronts) of the building. If the building is a house, of course, the outside (e.g., at least the roof) of outbuildings such as garages, sheds or sun-shades may also be used for a photovoltaic system.

The inventors could show that a photovoltaic system having a rated power of up to 25 KWp, preferably, up to 22 KWp or up to about 16 KWp, is sufficient for the power supply system of the invention. Depending, of course, on the efficiency of the photovoltaic system, about 150 m² of solar panels or less, preferably, less than about 120 m² of solar panels, less than about 100 m² of solar panels or less than about 80 m² of solar panels are required for a single family home. The solar panels preferably have an efficiency of at least 15%, at least 19%, or at least 25%.

The renewable energy plant generates the electric energy needed for the electro-biocatalysis.

The apparatus for the production of a methanol may utilize atmospheric CO₂, and preferably comprises an apparatus for concentration and, optionally, storage of atmospheric CO₂.

A preferred method and apparatus used for the production of methanol by the reduction of atmospheric CO₂ by means of electro-biocatalysis comprising directly heated electrodes are described in detail in WO 2016/078649 A8. Directly heated electrodes, in the context of the present application, include directly heatable electrodes which are not in use, as well as directly heatable electrodes currently in use, i.e., directly heated. Directly heated working electrodes are known in the art. They may be heated by a so-called symmetric order, or with filter circuits. One embodiment of directly heated electrodes comprises a third contact in the middle between the two contacts for providing heating current for providing a connection to the measuring instrument. Through this, disruptive influences of the heating current on the signal are prevented. The complex arrangement is however disadvantageous. According to the invention, a symmetric circuit arrangement is thus preferred which comprises a bridge circuit allowing for direct heating (Wachholz et al., 2007, Electroanalysis 19, 535-540, in particular, Fig. 3; Dissertation of Wachholz, 2009). Optionally, the working electrode is designed so that the temperature gradient on the surface is uniform (DE 10 2004 017 750). DE 10 2006 006 347 also teaches preferred directly heated electrodes. The directly heated electrode may e.g., have a spiral, helix, net or planar form (e.g., as taught in DE 10 2014 114 047. Directly heated electrodes may e.g., be obtained from Gensoric GmbH, Germany.

Said apparatus for the production of methanol comprises directly heated electrodes associated with at least one enzyme which catalyses a step in the reduction of CO₂ to methanol or is associated with at least one cofactor, whereby the cofactor can interact with at least one of enzyme which catalyses a step in the reduction of CO₂ to methanol. Enzymes which catalyse a step in the reduction of CO₂ to methanol are, e.g., carboanhydrase, formiatdehydrogenase, aldehyddehydrogenase and/or alcoholdehydrogenayse. The reaction is preferably carried out in several steps, whereby one enzyme associated with one electrode catalyses one step of the reduction of CO₂ to methanol. Preferably, the enzymes are each associated with an electrode heated to the temperature optimal for the catalyzed reaction. The cofactor or cofactors for said reactions may be regenerated in a reaction also taking place at a directly heated electrode at optimal temperature. In one embodiment, no cofactors are required for the reaction.

The apparatus may further comprise a device for removing and concentrating atmospheric CO₂, typically, at a small scale (e.g., up to about 10 kg/day for a single family home), in an energy efficient way to feed the CO₂ into the apparatus for the production of methanol as a substrate, and a CO₂ tank. Preferably, a device according to WO2016037668 A1 (PCT/EP2014/069569) is used.

In the present invention, atmospheric CO₂ includes both classic atmospheric CO₂, e.g., from outside and/or room air and CO₂ from burning methanol. In combination with the present system, the device for removing atmospheric CO₂ preferably utilizes CO₂ generated by the CHPP (and optionally, the furnace) by utilization of methanol. For example, the waste gas or exhaust form the CHPP is provided to the device for removing and concentrating atmospheric CO_{2.} This utilization of higher CO₂ concentrations than present in air improves efficiency of the device and reduces electricity requirements thereof. Typical devices for removing atmospheric CO₂ work in a periodic manner, with periods of CO₂ fixation and periods of CO₂ delivery. Preferably, in the system of the invention, the system is designed in a way that allows for CO₂ fixation when CO₂ is generated by burning methanol, e.g., the system allows for CO₂ fixation in a substantially continuous manner. This can be achieved, e.g., in a multi-chamber system, e.g., comprising two or three chambers with offset period of CO₂ fixation.

The apparatus may further comprise a device for separating the produced methanol from the reaction medium, preferably with a pervaporation process. The reaction medium may circulate, whereas the produced methanol is stored in a methanol tank. The electric power for the apparatus, particularly for the heating of the electrode, is supplied by the renewable energy plant, for example, a solar-based system such as a photovoltaic system.

Thus, the production of methanol merely requires renewable energy sources and atmospheric CO₂. The produced methanol serves as temporary energy storage in a liquid and easy to handle form. Methanol has several advantages over hydrogen for energy storage. It can be stored and used at room temperature and pressure rather than needing high pressure and/or cryogenic equipment. At ambient conditions, methanol is also much more energy dense than hydrogen (15.8 MJ/I versus 10.7 kJ/l at 1 bar pressure). Because methanol is a liquid at room temperature, it can be adapted into existing infrastructure much more easily than the gaseous hydrogen.

The produced methanol in stored in liquid form in a methanol tank. It can serve as long term energy storage or as immediately available energy. Therefore, in times with high renewable energy input, for example in the case of a solar power plant in summer, methanol can be produced in large amounts and stored in the tank. In times with low renewable energy input, the stored methanol can be used for heating or electricity generation. The methanol tank can have a capacity of, e.g., 500-2000L, preferably, about 800-1200 L, or about 1000 L for a single-family home. For a building with higher energy needs, a higher capacity tank should be used.

Methanol stored in the methanol tank may be fed to a combined heat and power plant (CHPP) (also designated cogeneration unit). The dimension of the CHPP depends on the building which is supplied by the power system according to the present invention.

The power system for a self-sufficient building according to the present invention can be dimensioned for several buildings, for example functional building such as hospitals, airport buildings, shopping centers, office buildings or residential buildings such as single-family houses, apartment buildings or housing complexes.

For example, the CHPP may have an electrical output of about 0.5-100 kWₑ (kilowatt electrical), about 1-50 kWₑ or about 5-10 kWₑ. The CHPP uses the produced methanol to generate thermal and electric energy. In one embodiment, the CHPP is also capable of providing cooling for the building and/or for refrigeration.

In the case of a single-family home or house the CHPP may be a nano CHPP. CHPP having electrical outputs of up to 2.5 kWe are designated nano CHPP. With typical electrical outputs of about 1-2 kWe and thermal outputs or about 2-19 kWt (kilowatt thermal), these products are suited to homes with an annual thermal demand of around 20,000 kWh, typical for family homes in most North European countries, or also for multi-family apartments with up to about 10, preferably, up to two or up to four family apartments.

For buildings with higher energy needs, micro or mini CHPP's (micro CFPP having more than 2.5 to 15 kWe output and mini CHPP having more than 15 to 50 kWe output) are optimal.

The overall energy efficiency of the CHPP preferably is at least 90%, more preferably, at least 92% or at least 94%. The CHPP may be operated on a heat-, current- or mains-controlled basis. Preferably, depending on demand, it is optimized to generate heat, delivering electricity as the by-product, or may follow electrical demand to generate electricity and heat as the by-product. In a preferred embodiment, the CHPP is optimized to generate heat, delivering electricity as the by-product. The average production rates of heat/electricity may be about 70/30% without a thermal heat pump, or 60/40% for a combination with a thermal heat pump.

It is noted that if the system does not comprise a furnace for burning methanol and generating heat, the risk of periodic heat shortages can be avoided by choosing about 2-4% greater dimensions of the CHPP (in particular, about 2% greater dimensions in the absence of a heat pump, and about 4% greater dimensions in the presence of a heat pump. This adaptation is typically sufficient, but of course, greater dimensions of renewable energy plant, water and methanol tanks and other components can also be used. Typically, the dimensions specified herein in general are sufficient, as they include safety margins.

Typically, most - if not all - of the produced methanol is, when needed for generation of thermal energy or electricity, fed to a CHPP as described above. If required, methanol may also be fed into a furnace which burns methanol to produce additional thermal energy for the heating and/or the hot water supply of the building. Said furnace should be optimized for burning methanol, and is preferably not suitable for burning alternative energy carriers. The furnace should produce heat from methanol with an efficiency of at least 80%, preferably, at least 82% or at least 84%.

The thermal energy generated by the CHPP, if not directly required for heating and/or hot water supply, may be transferred to a heat medium such as water, steam, granulate made of silica gel, metal hydride or zeolite. The heat medium can be stored in a heat accumulator. The heat accumulator can be a water tank, a steam tank, a thermochemical heat accumulator or a latent heat accumulator. The stored heat in the heat accumulator supplies thermal energy for the heating and the hot water supply of the building. A hot water tank used as a heat accumulator in a single family home may have a volume of about 150-300 L, e.g., about 200 L. Other thermal energy storage should have a similar capacity to such a hot water tank for a single family home.

The electric energy generated by the CHPP can be directly used. It may also be stored in a rechargeable battery.

When not all electric energy generated by the power supply system is needed, it may be primarily stored in a rechargeable battery. Such a battery should have an efficiency of at least 85%, preferably, at least 88% or at least 90%. When the battery is fully charged, further electric energy generated may be used for the apparatus for generating methanol. Further surplus electric energy may be fed to the grid.

The electric needs of the building may typically be primarily covered directly from the renewable energy plant, or, if required, from the electric energy generated by the CHPP (in case the CHPP is needed for producing thermal energy), or, if that is not sufficient, from the battery.

The thermal needs of the building may be primarily covered by the heat storage. If more thermal energy is needed, this may be covered by thermal energy generated from the CHPP. If more thermal energy is needed, this may be covered by thermal energy generated from the furnace for burning methanol. Of course, if the renewable energy plant also generates thermal energy, e.g., in the case of a combined photovoltaic/photothermal plant, this thermal energy may also primarily be used.

Preferably, the overall energy efficiency of components (a)-(h) is at least 40%, at least 44 %, or at least 45%. In combination with the thermal heat pump (g), the overall energy efficiency preferably is at least 60% or at least 62%.

An increase in the overall energy efficiency and reduction in the required capacity of the renewable energy plant is thus preferably achieved by using waste heat and combination with a heat pump. The heat pump uses waste heat generated by the apparatus for the production of methanol. This waste heat is then, corresponding on the demand, transferred to the heating, the hot water or the heat storage. The energy for running the heat pump is preferably directly derived from the renewable energy plant (e.g., the photovoltaic system) or the CHPP (which preferably generates about 40/60% electricity/heat). In one embodiment, the required energy can be directly generated from the methanol produced by the apparatus for the production of methanol as fuel for a motor-driven heat pump.The preferred efficiency of the heat pump is at least 40%, e.g., in a heat pump of quality grade 0.4. or better.

The inventors found that a self-sufficient house, as disclosed above, can advantageously be provided, in particular, for a single-family home, if the house at least complies with the passive-house standard, and if the power supply system comprises the combination of components detailed herein, preferably, in the dimensions described. E.g., if the heat requirement is too high, the CHPP generates too much electricity which cannot be locally used. Alternative technical solutions, e.g., comprising a direct methanol fuel cell (DFMC), were found to be disadvantageous because of high investment in equipment, or more requirements for storage equipment. The solution of the present invention also has the best overall energy efficiency, and an acceptable requirement for space.

**Table 1 shows results for some of the simulated power supply systems. Preferred variants are shown in bold.**

| Maximum requirements | Single family house, furnace | Single family house, furnace + CHPP + battery | **Single family house, furnace + CHPP(30/70% electricity/heat) + battery** | **Single family house, furnace + CHPP(40/60% electricity/heat) + battery + thermal heat pump** | Single family house, furnace + CHPP + battery + thermal heat pump |
|---|---|---|---|---|---|
| Thermal insulation standard | restored | restored | **passive** | **passive** | passive |
| photovoltaic system [kWp] | 52 | 58 | **22** | **16** | 16 |
| Apparatus for generating methanol [kW] | 31 | 35 | **15** | **11** | 11 |
| Methanol tank [liter] | 2700 | 32000 | **1000** | **900** | 900 |
| Battery [kWh] | x | 8 | **20** | **22** | 5 |
| Thermal heat storage [liter] | x | 500 | **150** | **300** | 300 |
| Overall efficiency | 47% | 38% | **45%** | **62%** | 62% |
| Thermal autarchy | 100% | 100% | **100%** | **100%** | 100% |
| Electricity autarchy | 45% | 100% | **100%** | **100%** | 91% |

In one embodiment, the power supply system (20) is for a self-sufficient building (30) which is a single-family home (preferably, a detached house) at least complying with the passive-house-standard, comprising
(a) a photovoltaic system (1) having a rated power of about 16-25 KWp,
(b) an apparatus (3) for the production of methanol by reduction of CO₂ by means of electro-biocatalysis comprising directly heated electrodes (12) having a power consumption of up to 16 kW, preferably, about 10-16 kW and an energy efficiency of 40-60%, preferably, about 46%,
(c) a methanol tank (4) having a capacity of about 800 -1500 L, preferably, 900-1000 L,
(d) a hot water storage tank having a capacity of about 100 - 500 L, preferably, 150-300 L,
(e) a nano or micro combined heat and power plant (5) having an overall efficiency of 88-98%, 90-96% or at least 92%, and
(f) a rechargeable battery (8) having an overall efficiency of 88-96% or at least 90% and a capacity of storing 4-25kWh, preferably, about 20-22 kWh in the absence of a heat pump or about 4-6 kWh, e.g., about 5 kWh, in the presence of a heat pump, and,
(g) optionally, a thermal heat pump (11), e.g., with a quality class of 0.4, for using the waste heat created by the apparatus (3) for the production of methanol,
(h) a furnace (7) for burning methanol and generating heat having an overall efficiency of at
   least 80 %, preferably, 82-90%.

In a preferred embodiment, the power supply system (20) is for a self-sufficient building (30) which is a single-family home (preferably, a detached house) at least complying with the passive-house-standard, comprising
(a) a photovoltaic system (1) having a rated power of 16-22 KWp, wherein, preferably, the rated power is about 16 KWp in the presence of a heat pump and about 22 KWp in the absence of a heat pump,
(b) an apparatus (3) for the production of methanol by reduction of CO₂ by means of electro-biocatalysis comprising directly heated electrodes (12) having a power consumption of about 11-15 kW and an energy efficiency of about 46%,
(c) a methanol tank (4) having a capacity of about 900 -1000 L,
(d) a hot water storage tank having a capacity of about 150 - 300 L,
(e) a nano or micro combined heat and power plant (5) having an overall efficiency of at least 92%, and
(f) a rechargeable battery (8) having an overall efficiency of at least 90% and a capacity of storing up to about 20-22 kWh in the absence of a heat pump or about 4-6 kWh, e.g., about 5 kWh, in the presence of a heat pump, and,
(g) a thermal heat pump (11), e.g., with a quality class of 0.4, for using the waste heat created by the apparatus (3) for the production of methanol,
(h) optionally, a furnace (7) for burning methanol and generating heat having an overall efficiency of at least about 80 %.

The dimensions of the components of the system can be scaled up, e.g., in a linear fashion for a multi-family home, e.g., for 2-10 families or 4-6 families. It will be appreciated that energy efficiency of power supply systems for buildings larger (or rather, having higher energy requirements) than a single family house is higher, and, typically, at least less thermal energy per family is needed because of more compact building structure. Accordingly, depending on scale, the dimensions of the components of the power supply system needed are relatively smaller.

Of course, it is always possible, but not required to use larger dimensions or any components, e.g., a larger photovoltaic system, or a combination thereof with another renewable power plant. Excess electrical energy can e.g., be fed to the grid. Excess thermal energy can be transferred to the environment, used for heating outbuildings such as a glasshouse or used in a communal heat system. Excess methanol can be further stored, sold or used as fuel for machines such as cars.

In one embodiment, the power supply system (20) is for a self-sufficient building (30) which is a multi-family home, preferably at least complying with the passive-house-standard, and comprising
(a) a photovoltaic system (1) having a rated power of 16-22 KWp/family, wherein, preferably, the rated power is about 16 KWp/family in the presence of a heat pump and about 22 KWp/family in the absence of a heat pump,
(b) an apparatus (3) for the production of methanol by reduction of CO₂ by means of electro-biocatalysis comprising directly heated electrodes (12) having a power consumption of about 11-15 kW and an energy efficiency of about 46%,
(c) a methanol tank (4) having a capacity of about 900 -1000 L/family,
(d) a hot water storage tank having a capacity of about 150 - 300 L/family,
(e) a nano or micro combined heat and power plant (5) having an overall efficiency of at least 92%, and
(f) a rechargeable battery (8) having an overall efficiency of at least 90% and a capacity of storing up to about 20-22 kWh/family in the absence of a heat pump or about 4-6 kWh/family, e.g., about 5 kWh/family, in the presence of a heat pump, and,
(g) a thermal heat pump (11), e.g., with a quality class of 0.4, for using the waste heat created by the apparatus (3) for the production of methanol,
(h) optionally, a furnace (7) for burning methanol and generating heat having an overall efficiency of at least about 80 %.

Optionally, said systems comprise both g) thermal heat pump (11) and h) furnace (7). Preferably, they do not comprise a furnace (7), but comprise a heat pump (11).

The present disclosure will be more readily appreciated by reference to the following detailed description considered in connection with the accompanying drawings.

### Brief description of the drawings

Figure 1 is a flowchart of the power-supply system in a defined embodiment for a single family house having an overall efficiency of 45 %.
Figure 2 is a flowchart of the power supply system in a defined embodiment for a single family house including a thermal heat pump having an overall efficiency of 62%

### Detailed description of preferred embodiments

In the following, the invention will be explained in more detail with reference to the accompanying figures. In the Figures, like elements are denoted by identical reference numerals and repeated description thereof may be omitted in order to avoid redundancies.

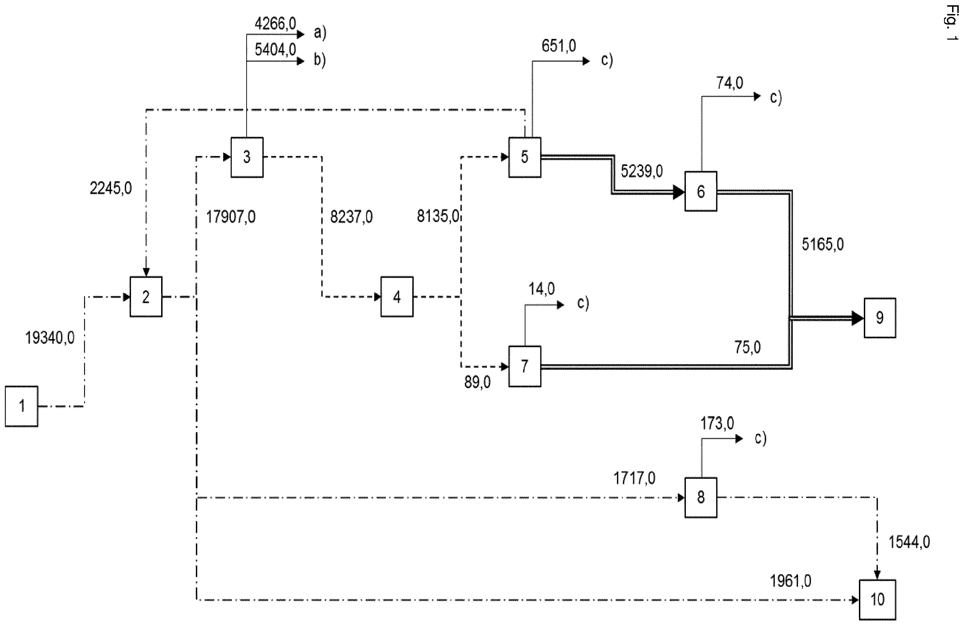

Figure 1 shows a first embodiment according to the present invention which relates to a single-family home, in particular, house, which has an average thermal energy need of 15 kWh/m²a and, preferably, meets the requirements of the passive-house-standard. Energy needs for warm water are at most 20 kWh/m²a and energy needs for electricity are at most 23 kWh/m²a. The power-supply system of that embodiment has an efficiency of 45 %.

For the dimensioning of the power-supply system (20), it was considered that the thermal energy need amounts 70% of the total energy amount of the single-family house and the electric energy need amounts 30% of the total energy amount single-family house. If combined with a thermal heat pump (11) the dimensioning of the power supply system (20) would be that the thermal energy need amounts 60% of the total energy amount of the single-family house and the electric energy need amounts 40% of the total energy amount single-family house.

The renewable energy plant (1), which preferably is a photovoltaic system, has a rated output of 16-22 kWp. An output of 19340 kWh was used for the calculation. This electrical energy is combined with the output of the CHPP (5) which adds 2445 kWh of electrical energy to the output of the renewable energy plant (1). These combined electrical energy sources are summarized in (2). A first amount of 1961 kWh of the electric energy (20) of the renewable energy plant (1) and CHPP (5) combined output (2) is directly used for the household electrical energy supply (10). A second amount of 1717 kWh electric power which is not needed for this purpose is fed into the rechargeable battery (8) to buffer excess energy produced by the CHPP (5) and the renewable energy plant (1) and can be used when required. The losses of the battery amount to 173 kWh (c), and 1544 kWh can be used in the household (10). A third amount of 17079 kWh of the electric energy (20) of the renewable energy plant (1) and CHPP (5) combined output (2) is directly is fed into the reactor (3), i.e., the apparatus for the generation of methanol. The reactor (3) (11 -15 kW) produces methanol by the reduction of CO₂ derived from the atmosphere by means of electro-biocatalysis comprising directly heated electrodes (12). The losses in the production of methanol can summarized as 4266 kWh caused by the CO₂-segregation (a), and 5404 kWh waste heat by the means of heating up the electrodes (12) (b). Methanol having an energy equivalent of 8237 kWh is stored in a methanol tank (4). The methanol tank (4) has a volume of 900-1000 I.

Methanol corresponding to 8135 kWh is fed into the CHPP (5). The CHPP (5) produces thermal energy (5239 kWh) and electricity (2245 kWh), wherein the losses amount 651 kWh (c). The thermal energy is accumulated in a thermal energy storage (6) and can be used (5165 kWh) for heating and/or hot water supply (9). The losses of the thermal energy storage (6) amount 74 kWh.

If there is an additional requirement for thermal energy, methanol corresponding to 89 kWh can optionally be fed into a furnace (7) for burning methanol and thereby generating thermal energy of 75 kWh, which is directly used for heating and/or hot water supply (9). The losses of the furnace (7) amount to 14 kWh (c).

Excess electric power can be fed into the grid if not used by the household, for battery charging or for methanol production.

The advantage of the present invention is that the system (20) is capable of covering both electrical energy (41) and thermal energy needs (40) of the building (30) independent of any additional energy sources throughout the year.

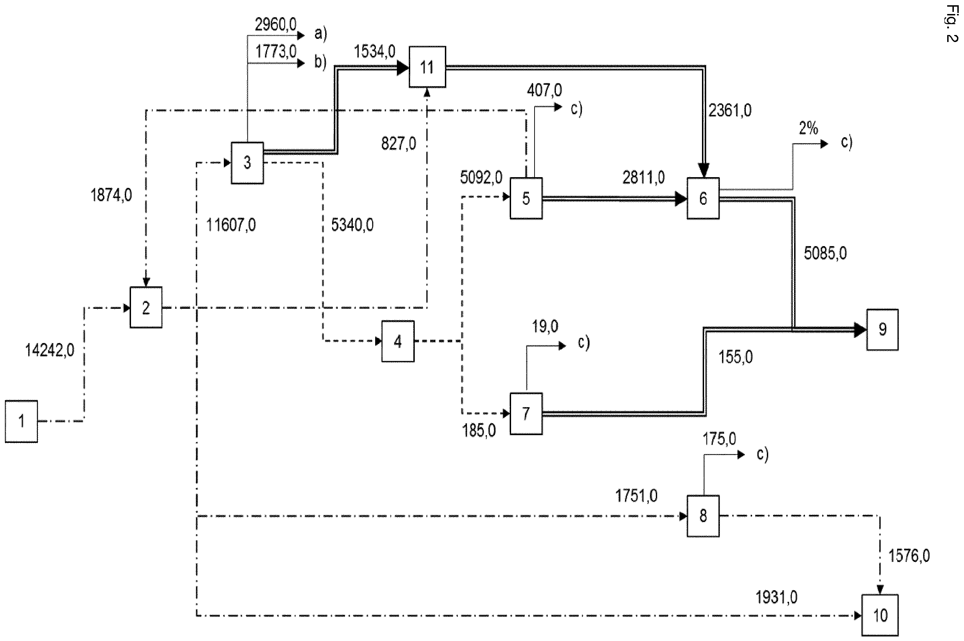

Figure 2 shows a second embodiment according to the present invention in combination with a thermal heat pump which relates to a single-family home, in particular, house, which has an average thermal energy need of 15 kWh/m²a, wherein energy needs for warm water are at most 20 kWh/m²a and energy needs for electricity are at most 23 kWh/m²a. Preferably, the house meets the requirements of the passive-house-standard. In this figure the implementation of a thermal heat pump (11) increases the overall efficiency to 62 %.

For the dimensioning of the power-supply system (20), it was considered that the thermal energy need that the thermal energy need amounts 60% of the total energy amount of the single-family house and the electric energy need amounts 40% of the total energy amount single-family house The renewable energy plant (1), which preferably is a photovoltaic system, has a rated output of 16-22 kWp. An output of 14242 kWh was used for the calculation. This electrical energy is combined with the output of the CHPP (5) which adds 1874 kWh of electrical energy to the output of the renewable energy plant (1). These combined electrical energy sources are summarized in (2). A first amount of 1931 kWh of the electric energy (20) of the renewable energy plant (1) and CHPP (5) combined output (2) is directly used for the household energy supply (10). A second amount of 1751 kWh electric power which is not needed is fed into the rechargeable battery (8) to buffer excess energy produced by the CHPP (5) and the renewable energy plant (1) and can be used when required. The losses of the battery amount to 175 kWh (c), 1576 kWh can be used in the household (10). A third amount of 11607 kWh of the electric energy (20) of the renewable energy plant (1) and CHPP (5) combined output (2) is directly is fed into the reactor (3), i.e., the apparatus for the generation of methanol. The reactor (3) (11 -15 kW) produces methanol by the reduction of CO₂ derived from the atmosphere by means of electro-biocatalysis comprising directly heated electrodes (12). The losses in the production of methanol can summarized as 2960 kWh caused by the CO₂-segregation (a), and 1773 kWh waste heat by the means of heating up the electrodes (12) (b). Methanol having an energy equivalent of 5340 kWh is stored in a methanol tank (4). The methanol tank (4) has a volume of 900-1000 I. Excess electric power can be fed into the grid.

Methanol corresponding to 5092 kWh is fed into the CHPP (5). The CHPP (5) produces thermal energy (2811 kWh) and electricity (1874 kWh), wherein the losses amount 407 kWh (c). 1534 kWh of thermal energy (waste heat) produced by the reactor (3) and 827 kWh of electrical energy from (2) (combined renewable energy plant (1) and CHPP (5)) are used by the thermal heat pump (11) to store 2361 kWh of thermal energy in the thermal energy storage (6). The quality class of the thermal heat pump (11) is at least 0.4. The thermal power is accumulated in a thermal energy storage (6) and can be used (5085 kWh) for heating and/or hot water supply (9). The losses of the thermal energy storage (6) amount 87 kWh.

If there is an additional requirement for thermal energy, methanol corresponding to185 kWh can optionally be fed into a furnace (7) for burning methanol and thereby generating thermal energy of 155 kWh, which is directly used for heating and/or hot water supply (9). The losses of the furnace (7) amount to 19 kWh (c).

The advantage of the present invention is that the system (20) is capable of covering both electrical energy (41) and thermal energy needs (40) of the building (30) independent of any additional energy sources throughout the year. The system (20) furthermore is CO₂-neutral during use.

In the context of the invention, "about" in intended to mean +/- 10% of the specified value, if not specifically defined otherwise.

The exemplified embodiments and items only depict examples intended to illustrate the invention. Hence, the embodiments shown here should not be understood to limit the invention. All possible combinations and configurations of the described features can be chosen within to the scope of the invention, which is limited by the claims only.

### List of reference numerals

- 1: renewable energy plant (e.g. photovoltaic system)
- 2: renewable energy plant and CHPP (combined electricity)
- 3: apparatus for producing methanol
- 4: methanol tank
- 5: CHPP
- 6: thermal energy storage
- 7: furnace for burning methanol
- 8: rechargeable battery
- 9: hot water supply
- 10: household energy supply
- 11: thermal heat pump
- 12: heated electrodes
- 20: power supply system
- 30: building
- a): losses in CO₂-segregation
- b): losses in methanol production, in particular, waste heat
- c): power loss
- 40: current
- 41: thermal energy
- 42: methanol
- 43: apparatus for concentration of atmospheric CO₂

## Claims

1. A power supply system (20) for a self-sufficient building (30), comprising
(a) a renewable energy plant (1) for providing electric energy,
(b) an apparatus (3) for the production of methanol by reduction of CO₂ by means of electro-biocatalysis comprising directly heated electrodes (12) for producing methanol using electric energy,
(c) a methanol tank (4) for storing methanol,
(d) a thermal energy storage (6) for storing and withdrawing thermal energy,
(e) a combined heat and power plant (5) optimized to generate heat, delivering electricity as the by-product, for generating thermal and electric energy from methanol, and
(f) a rechargeable battery (8) for storing and withdrawing electric energy, and,
(g) a thermal heat pump (11) for using waste heat created by the apparatus (3) for the production of methanol for generation of thermal energy,
wherein the system (20) is capable of covering both electrical energy (40) and thermal energy needs (41) of the building (30) throughout the year, independent of additional energy sources.

2. The power supply system (20) according to claim 1, comprising (h) a furnace (7) for burning methanol and generating heat.

3. The power supply system (20) according to any of the preceding claims, wherein the renewable energy plant (1) is selected from the group comprising a solar-based system, a wind-based plant, and a hydroelectric power plant, preferably, a photovoltaic system.

4. The power supply system (20) according to any of the preceding claims, wherein the renewable energy plant (1) is a photovoltaic system having a rated power of up to 25 KWp, preferably, about 16-22 KWp.

5. The power supply system according (20) to any of the preceding claims, wherein the building (30) is
- a house selected from the group comprising a single-family house and a multi-family house, or
- a functional building comprising a hospital, an airport, a shopping center, an office building, a school,
- or a combination thereof.

6. The power supply system (20) according to any of the preceding claims, wherein the building (30) is a single-family house, preferably, a detached house.

7. The power supply system (20) according to any of the preceding claims, wherein the building (30) at least complies with the passive-house-standard.

8. The power supply system (20) according to any of the preceding claims, wherein the apparatus (3) for the production of methanol utilizes atmospheric CO₂, wherein the apparatus (3) preferably comprises an apparatus for concentration and, optionally, storage of atmospheric CO₂.

9. The power supply system (20) according to any of the preceding claims, wherein the thermal energy storage (6) is a steam accumulator, a hot water storage tank, a steam tank, a thermochemical heat accumulator or a latent heat accumulator, preferably, a hot water storage tank.

10. The power supply system (20) according to any one of the preceding claims, wherein the combined heat and power plant (5) is operated on a heat-controlled basis.

11. The power supply system (20) according to any of the preceding claims, wherein the overall energy efficiency of components (a)-(g) is at least 44 %, preferably, at least 45%.

12. The power supply system (20) according to any of the preceding claims, wherein the overall energy efficiency of components (a)-(h) is at least 61 %, preferably, at least 62%.

13. The power supply system (20) according to any of the preceding claims, wherein the self-sufficient building (30) is a family home at least complying with the passive-house-standard, comprising
(a) a photovoltaic system having a rated power of up to 25 KWp/family, preferably, 16- 22 KWp/family,
(b) an apparatus (3) for the production of methanol by reduction of CO₂ by means of electro-biocatalysis comprising directly heated electrodes (11) having 11 to 15 kW/family power consumption,
(c) a methanol tank (4) having a capacity of about 800-1500 L/family, preferably, 900-1000 L/family,
(d) a hot water storage tank having a capacity of 100 - 500 L/family, preferably, 150-300 L/family,
(e) a combined heat and power plant (5) having an overall efficiency of at least 92%, and
(f) a rechargeable battery (9) having an overall efficiency of at least 90% and a capacity of storing up to about 22 kWh/family, preferably, up to 5 kWh/family, and,
(g) a thermal heat pump (11) for using the waste heat created by the apparatus (3) for the production of methanol.

14. The power supply system (20) according to claim 13, wherein the home is a single family home preferably, a detached house.

15. A self-sufficient building (30) comprising the power supply system (20) of any of the preceding claims.

16. A process for operating a power supply system (20) according to any of claims 1 to 15 for the decentralized power supply of a building (30), comprising the steps of
i. providing electric energy from the renewable energy source (1); and
ii. producing methanol with the apparatus (3) for the production of methanol using electric energy; and
iii. storing methanol in the methanol tank (4); and
iv. generating thermal and electric energy from methanol with the combined heat and power plant (5); and
v. storing thermal energy in the thermal energy storage (6) and withdrawing thermal energy from the thermal energy storage; and
vi. storing electric energy in the rechargeable battery (8) and withdrawing electric energy from the rechargeable battery (8);
vii. optionally, generating thermal energy with the furnace (7) for burning the methanol; and/or
viii. using waste heat created by the apparatus (3) for the production of methanol for generation of thermal energy with a thermal heat pump (11).

17. The power supply system (20) of any of claims 1-14, the building (30) according to claim 15, or the process according to claim 16, wherein excess electric power (20) from the renewable energy source (1) and/or the combined heat and power plant (5) can be fed into the grid.

## Patentansprüche

1. Ein Energieversorgungssystem (20) für ein autarkes Gebäude (30), umfassend
(a) eine Erneuerbare-Energien-Anlage (1) zur Bereitstellung elektrischer Energie,
(b) eine Vorrichtung (3) zur Produktion von Methanol durch die Reduktion von CO₂ mittels Elektrobiokatalyse, umfassend direkt beheizte Elektroden (12) zur Produktion von Methanol unter Verwendung von elektrischer Energie,
(c) ein Methanol-Tank (4) zur Lagerung von Methanol,
(d) ein thermischer Energiespeicher (6) zur Speicherung und Entnahme von thermischer Energie,
(e) ein Kraft-Wärme-Kopplungs-Kraftwerk (5), das optimiert ist zur Generierung von Wärme, wobei Elektrizität als Nebenprodukt geliefert wird, zur Generierung von thermischer und elektrischer Energie aus Methanol, und
(f) eine wiederaufladbare Batterie (8) zur Speicherung und Entnahme von elektrischer Energie, und,
(g) eine thermische Wärmepumpe (11) zur Nutzung der von der Vorrichtung (3) zur Produktion von Methanol erzeugten Abwärme für die Generierung von thermischer Energie,
wobei das System (20) in der Lage ist, den Bedarf sowohl an elektrische Energie-(40) als auch an thermischer Energie (41) des Gebäudes (30) über das Jahr abzudecken, unabhängig von weiteren Energiequellen.

2. Das Energieversorgungssystem (20) nach Anspruch 1, umfassend (h) einen Ofen (7) zur Verbrennung von Methanol und zur Wärmegenerierung.

3. Das Energieversorgungssystem (20) nach einem der vorhergehenden Ansprüche, wobei die Erneuerbare-Energien-Anlage (1) ausgewählt ist aus der Gruppe umfassend ein solarbasiertes System, eine windbasierte Anlage und eine Wasserkraftanlage, bevorzugt ein Photovoltaik-System.

4. Das Energieversorgungssystem (20) nach einem der vorhergehenden Ansprüche, wobei die Erneuerbare-Energien-Anlage (1) ein Photovoltaik-System mit einer Nennleistung von bis zu 25 KWp, bevorzugt etwa 16-22 KWp, ist.

5. Das Energieversorgungssystem (20) nach einem der vorhergehenden Ansprüche, wobei das Gebäude (30)
- ein Haus ausgewählt aus der Gruppe umfassend ein Einfamilienhaus und ein Mehrfamilienhaus, oder
- ein funktionelles Gebäude umfassend ein Krankenhaus, ein Flughafen, ein Einkaufszentrum, ein Bürogebäude, eine Schule,
- oder eine Kombination davon
ist.

6. Das Energieversorgungssystem (20) nach einem der vorhergehenden Ansprüche, wobei das Gebäude (30) ein Einfamilienhaus, bevorzugt ein freistehendes Haus, ist.

7. Das Energieversorgungssystem (20) nach einem der vorhergehenden Ansprüche, wobei das Gebäude (30) mindestens dem Passivhausstandard entspricht.

8. Das Energieversorgungssystem (20) nach einem der vorhergehenden Ansprüche, wobei die Vorrichtung (3) für die Produktion von Methanol atmosphärisches CO₂ verwendet, wobei die Vorrichtung (3) bevorzugt eine Vorrichtung zur Konzentration und, optional, Speicherung von atmosphärischem CO₂ umfasst.

9. Das Energieversorgungssystem (20) nach einem der vorhergehenden Ansprüche, wobei der thermischen Energiespeicher (6) ein Dampfspeicher, ein Warmwasserspeichertank, ein Dampftank, ein thermochemischer Wärmespeicher oder ein Latentwärmespeicher, bevorzugt ein Warmwasserspeichertank, ist.

10. Das Energieversorgungssystem (20) nach einem der vorhergehenden Ansprüche, wobei das Kraft-Wärme-Kopplungs-Kraftwerk (5) auf einer wärmekontrollierten Basis betrieben wird.

11. Das Energieversorgungssystem (20) nach einem der vorhergehenden Ansprüche, wobei die Gesamtenergieeffizienz der Komponenten (a)-(g) mindestens 44 %, bevorzugt mindestens 45%, ist.

12. Das Energieversorgungssystem (20) nach einem der vorhergehenden Ansprüche, wobei die Gesamtenergieeffizienz der Komponenten (a)-(h) mindestens 61 %, bevorzugt mindestens 62%, ist.

13. Das Energieversorgungssystem (20) nach einem der vorhergehenden Ansprüche, wobei das autarke Gebäude (30) ein Familienheim ist, das mindestens dem Passivhausstandard entspricht, umfassend
(a) ein Photovoltaik-System mit einer Nennleistung von bis zu 25 KWp/Familie, bevorzugt 16- 22 KWp/Familie,
(b) eine Vorrichtung (3) zur Produktion von Methanol durch Reduktion von CO₂ mittels Elektrobiokatalyse, die direkt beheizte Elektroden (11) mit 11 bis 15 kW/Familie Energieverbrauch umfasst,
(c) einen Methanol-Tank (4) mit einer Kapazität von etwa 800-1500 L/Familie, bevorzugt 900-1000 L/Familie,
(d) einen Warmwasserspeichertank mit einer Kapazität von 100 - 500 L/Familie, bevorzugt 150-300 L/Familie,
(e) ein Kraft-Wärme-Kopplungs-Kraftwerk (5) mit einem Gesamtwirkungsgrad von mindestens 92%, und
(f) eine wiederaufladbare Batterie (9) mit einem Gesamtwirkungsgrad von mindestens 90% und einer Speicherkapazität von bis zu etwa 22 kWh/Familie, bevorzugt bis zu 5 kWh/Familie, und
(g) eine thermische Wärmepumpe (11) zur Nutzung der durch die Vorrichtung (3) für die Produktion von Methanol erzeugten Abwärme.

14. Das Energieversorgungssystem (20) nach Anspruch 13, wobei das Haus ein Einfamilienhaus, bevorzugt ein freistehendes Haus, ist.

15. Ein autarkes Gebäude (30), das das Energieversorgungssystem (20) nach einem der vorhergehenden Ansprüche umfasst.

16. Ein Verfahren zum Betreiben eines Energieversorgungssystems (20) nach einem der Ansprüche 1 bis 15 für die dezentrale Energieversorgung eines Gebäudes (30), umfassend Schritte, bei denen man
i. elektrische Energie aus der erneuerbaren Energiequelle (1) bereitstellt; und
ii. Methanol mit der Vorrichtung (3) zur Produktion von Methanol unter Verwendung elektrischer Energie produziert; und
iii. Methanol in dem Methanol-Tank (4) lagert; und
iv. thermische und elektrische Energie aus Methanol mit der Kraft-Wärme-Kopplungsanlage (5) generiert; und
v. thermische Energie in dem thermischen Energiespeicher (6) speichert und thermische Energie aus dem thermischen Energiespeicher entnimmt; und
vi. elektrische Energie in der wiederaufladbaren Batterie (8) speichert und elektrische Energie aus der wiederaufladbaren Batterie (8) entnimmt;
vii. optional, thermische Energie mit dem Ofen (7) zur Verbrennung des Methanols generiert; und/oder
viii. durch die Vorrichtung (3) zur Produktion von Methanol erzeugte Abwärme zur Generierung von thermischer Energie mit einer Wärmepumpe (11) nutzt.

17. Das Energieversorgungssystem (20) nach einem der Ansprüche 1-14, das Gebäude (30) nach Anspruch 15, oder das Verfahren nach Anspruch 16, wobei überschüssige elektrische Energie (20) aus der erneuerbaren Energiequelle (1) und/oder der Kraft-Wärme-Kopplungsanlage (5) in das Netz eingespeist werden kann.

## Revendications

1. Système d'alimentation en énergie (20) pour un bâtiment autonome (30), comprenant
(a) une centrale à énergie renouvelable (1) destinée à fournir de l'énergie électrique,
(b) un appareil (3) pour la production de méthanol par réduction de CO₂ au moyen d'une électro-biocatalyse comprenant des électrodes à chauffage direct (12) destiné à produire du méthanol en utilisant de l'énergie électrique,
(c) un réservoir de méthanol (4) destiné à stocker du méthanol,
(d) un dispositif de stockage d'énergie thermique (6) destiné à stocker et prélever de l'énergie thermique,
(e) une centrale de production combinée de chaleur et d'électricité (5) optimisée afin de générer de la chaleur, délivrant de l'électricité comme sous-produit, destinée à générer de l'énergie thermique et électrique à partir de méthanol, et
(f) une batterie rechargeable (8) destinée à stocker et prélever de l'énergie électrique, et
(g) une pompe à chaleur thermique (11) destinée à utiliser la chaleur perdue créée par l'appareil (3) pour la production de méthanol pour la génération d'énergie thermique,
le système (20) étant capable de couvrir les besoins aussi bien en énergie électrique (40) qu'en énergie thermique (41) du bâtiment (30) tout au long de l'année, indépendamment de sources d'énergie supplémentaires.

2. Système d'alimentation en énergie (20) selon la revendication 1, comprenant (h) une chaudière (7) destinée à brûler du méthanol et générer de la chaleur.

3. Système d'alimentation en énergie (20) selon l'une quelconque des revendications précédentes, dans lequel la centrale à énergie renouvelable (1) est sélectionnée dans le groupe comprenant un système solaire, une centrale éolienne et une centrale hydroélectrique, de préférence un système photovoltaïque.

4. Système d'alimentation en énergie (20) selon l'une quelconque des revendications précédentes, dans lequel la centrale à énergie renouvelable (1) est un système photovoltaïque ayant une puissance nominale allant jusqu'à 25 kWp, de préférence d'environ 16 à 22 kWp.

5. Système d'alimentation en énergie (20) selon l'une quelconque des revendications précédentes, dans lequel le bâtiment (30) est
- une habitation sélectionnée dans le groupe comprenant une maison individuelle et un immeuble collectif, ou
- un bâtiment fonctionnel comprenant un hôpital, un aéroport, un centre commercial, un immeuble de bureaux, une école,
- ou une combinaison des deux.

6. Système d'alimentation en énergie (20) selon l'une quelconque des revendications précédentes, dans lequel le bâtiment (30) est une maison individuelle, de préférence une maison séparée.

7. Système d'alimentation en énergie (20) selon l'une quelconque des revendications précédentes, dans lequel le bâtiment (30) est conforme au moins à la norme de la maison passive.

8. Système d'alimentation en énergie (20) selon l'une quelconque des revendications précédentes, dans lequel l'appareil (3) pour la production de méthanol utilise du CO₂ atmosphérique, l'appareil (3) comprenant de préférence un appareil pour la concentration et, facultativement, le stockage de CO₂ atmosphérique.

9. Système d'alimentation en énergie (20) selon l'une quelconque des revendications précédentes, dans lequel le dispositif de stockage d'énergie thermique (6) est un accumulateur de vapeur, un réservoir de stockage d'eau chaude, un réservoir de vapeur, un accumulateur de chaleur thermochimique ou un accumulateur de chaleur latente, de préférence un réservoir de stockage d'eau chaude.

10. Système d'alimentation en énergie (20) selon l'une quelconque des revendications précédentes, dans lequel la centrale de production combinée de chaleur et d'électricité (5) est exploitée sur une base commandée en chaleur.

11. Système d'alimentation en énergie (20) selon l'une quelconque des revendications précédentes, dans lequel le rendement énergétique global des composants (a) à (g) est d'au moins 44 %, de préférence d'au moins 45 %.

12. Système d'alimentation en énergie (20) selon l'une quelconque des revendications précédentes, dans lequel le rendement énergétique global des composants (a) à (h) est d'au moins 61 %, de préférence d'au moins 62 %.

13. Système d'alimentation en énergie (20) selon l'une quelconque des revendications précédentes, dans lequel le bâtiment autonome (30) est une habitation familiale conforme au moins à la norme de la maison passive, comprenant
(a) un système photovoltaïque ayant une puissance nominale allant jusqu'à 25 kWp/famille, de préférence de 16 à 22 kWp/famille,
(b) un appareil (3) pour la production de méthanol par réduction de CO₂ au moyen d'une électro-biocatalyse comprenant des électrodes à chauffage direct (11) ayant une puissance consommée de 11 à 15 kW/famille,
(c) un réservoir de méthanol (4) ayant une capacité d'environ 800 à 1500 L/famille, de préférence de 900 à 1000 L/famille,
(d) un réservoir de stockage d'eau chaude ayant une capacité de 100 à 500 L/famille, de préférence de 150 à 300 L/famille,
(e) une centrale de production combinée de chaleur et d'électricité (5) ayant un rendement global d'au moins 92 %, et
(f) une batterie rechargeable (9) ayant un rendement global d'au moins 90 % et une capacité de stockage allant jusqu'à environ 22 kWh/famille, de préférence jusqu'à 5 kWh/famille, et
(g) une pompe à chaleur thermique (11) destinée à utiliser la chaleur perdue créée par l'appareil (3) pour la production de méthanol.

14. Système d'alimentation en énergie (20) selon la revendication 13, dans lequel l'habitation est une maison individuelle, de préférence une maison séparée.

15. Bâtiment autonome (30) comprenant le système d'alimentation en énergie (20) de l'une quelconque des revendications précédentes.

16. Procédé d'exploitation d'un système d'alimentation en énergie (20) selon l'une quelconque des revendications 1 à 15 pour l'alimentation en énergie décentralisée d'un bâtiment (30), comprenant les étapes consistant à
i. fournir de l'énergie électrique à partir de la source d'énergie renouvelable (1) ; et
ii. produire du méthanol avec l'appareil (3) pour la production de méthanol en utilisant de l'énergie électrique ; et
iii. stocker du méthanol dans le réservoir de méthanol (4) ; et
iv. générer de l'énergie thermique et électrique à partir de méthanol avec la centrale de production combinée de chaleur et d'électricité (5) ; et
v. stocker de l'énergie thermique dans le dispositif de stockage d'énergie thermique (6) et prélever de l'énergie thermique du dispositif de stockage d'énergie thermique ; et
vi. stocker de l'énergie électrique dans la batterie rechargeable (8) et prélever de l'énergie électrique de la batterie rechargeable (8) ;
vii. facultativement, générer de l'énergie thermique avec la chaudière (7) destinée à brûler le méthanol ; et/ou
viii. utiliser la chaleur perdue créée par l'appareil (3) pour la production de méthanol pour la génération d'énergie thermique avec une pompe à chaleur thermique (11).

17. Système d'alimentation en énergie (20) selon l'une quelconque des revendications 1 à 14, bâtiment (30) selon la revendication 15 ou procédé selon la revendication 16, dans lequel un excédent de puissance électrique (20) provenant de la source d'énergie renouvelable (1) et/ou de la centrale de production combinée de chaleur et d'électricité (5) peut être appliqué au réseau électrique.
